# EUROPEAN PATENT SPECIFICATION

(11) **EP 3 621 779 B1**
(45) Date of publication and mention of the grant of the patent: **03.03.2021**
(21) Application number: 18722886.1
(22) Date of filing: 01.05.2018
(51) Int. Cl.: B29C 44/00, E06B 3/277, B29L 31/00

(54) **A METHOD FOR MAKING A FRAME MEMBER, A FRAME MEMBER, A FRAME STRUCTURE AND USE OF A FRAME MEMBER**
VERFAHREN ZUR HERSTELLUNG EINES RAHMENELEMENTS, RAHMENELEMENT, RAHMENSTRUKTUR UND VERWENDUNG EINES RAHMENELEMENTS
PROCÉDÉ DE FABRICATION D'UN ÉLÉMENT DE CADRE, ÉLÉMENT DE CADRE, STRUCTURE DE CADRE ET UTILISATION D'UN ÉLÉMENT DE CADRE

(30) Priority: 10.05.2017 DK PA201770329
(43) Date of publication of application: 18.03.2020
(73) Proprietor: VKR Holding A/S, 2970 Hørsholm (DK)
(72) Inventor: MELSEN, Michael, 2970 Hørsholm (DK); NITZSCH GRØNBORG, Kristian, 2970 Hørsholm (DK)
(74) Representative: AWA Denmark A/S
(86) International application number: PCT/DK2018/050084
(87) International publication number: WO 2018/206061

(56) References cited:
- DE-A1- 3 609 332

## Description

The present invention relates to a method of producing a frame member for a window or a door, the method comprising the steps of:
providing a sheet of metal, rollforming the sheet of metal into a frame shell having a predetermined profile, and introducing a foaming material into the frame shell.

The invention further relates to a frame member and use of a frame member.

The frame member may furthermore be used to create a frame structure for at window or a door, such as a sash or a frame.

Traditional wooden frame or sash structures are considered aesthetically pleasing but are not very robust, particularly not when exposed to moisture, and they lack the insulating properties desired in modern buildings.

The robustness issues have previously been solved with window frames made from polyvinylchloride (PVC), which is very widely used, while other window makers, including the applicant, have chosen to make the frames from profiles with a wooden core, typically of ply-wood, and a polyurethane (PUR) shell. Other plastic materials have also been used for the shell, but PUR is by far the most widely used, since it has suitable properties with regard to weather resistance, insulation, mouldability etc.

These frames, however, still lack sufficient insulating properties to live up to the still stricter building regulations, which are being adopted in many countries, and it has therefore been attempted to include insulating materials in the frame member

DE2314303 A1 relates to the production of a rigid foam profile, which has at least partially as a cover layer at least one panel, this panel being inserted into a mould cavity of a mould before a liquid, rigid foam-forming reaction mixture is introduced.

In US6047514, a process is described in which a window frame is produced by rolforming metal into a structural shape, extruding thermoplastic to both inside and outside. A urethane composition is then injected into the shape. This results in a complex production with much material and thus high costs.

It is the object of the invention to provide a method to manufacture a frame member having good thermal insulating properties, which are cheaper to produce and also provides an environmentally friendly alternative due to the less amount of material, having suitable rigidity and strength properties. It is also an object of the invention to provide a frame member that has a core made from a process that provides less internal tensions, and subsequently maintains its given shape.

This is achieved by the further steps of providing a sheet metal having a thickness of 0.25 mm or less and arranging the frame shell in a calibration tube until the foam material has set.

By using a method like this, a core of a foam material may be provided. The core may assume the shape of the profile, and therefore any additional machining of the core may be avoided. By allowing the foam to expand and fully set within the profile, internal tensions may be prevented within the core. The calibration tube may have an internal shape that corresponds to the desired shape of the frame shell. The injected foam material may therefore be allowed to expand within the profile and within the calibration tube, thereby maintaining the desired shape. the calibration tube helps to maintain the desired shape, which would not be reach if a calibration tube were not used, due to the small thickness of the metal. Hence, the foam material expands to assume the shape of the frame shell. This provides a frame member with sufficient structural strength and insulation properties approximately 4-5 times better than the insulation properties of wood. The strength imparting layer is preferably mostly made from a low thermal conductive metal, having a low thermal transfer value. The metal may be provided in a coil or roll of sheet metal, which is rollformed into a frame shell having a profile. The frame shell has an opening into which the foam material is injected. Once the foam material expands, the frame shell is held in a calibration tube or a similar device that helps to maintain the shape the metal has been roll formed into, in order to control the expansion. By allowing the foam to expand within the frame shell, under the influence of the calibration tube, internal tensions may be prevented within the core.

The foaming material may be provided by a composition that foams up to a rigid material, preferably having good insulation properties. The composition may comprise isocyanate and polyol, which upon reaction with each other creates a foam which expands within the profile. This is an advantage since the components are fluid until they react with each other. Once the components mix, they react with each other and with the humidity in the air to create a foam, which subsequently expand. The polyol may contain catalysts, surfactants, blowing agents etc. the isocyanate may contain additives such as chain extenders, cross linkers, surfactants, flame retardants, blowing agents, pigments, and fillers. A non-isocyanate may be used as well for creating the urethane foam.

In one embodiment, the method may comprise adding a reactant to the composition, wherein the reactant is CO₂ or pentane gas. The reactant may allow the foaming reaction to increase.

In one embodiment, the setting of the foam may be accelerated by the addition of one or more accelerating agents to the composition. Accelerating agent(s) may be added to the composition as well, which will reduce the setting time and thereby the production costs.

In one embodiment, the method further comprises the step of pulling the frame shell through a calibration tube continuously during the setting time during which the foam material sets. By pulling the frame shell through the calibration tube, the frame shell may at the same time be conveyed to a subsequent production station. This will allow the core to assume the shape of the profile, and there is no risk that the expanding foam deforms the shape of the frame shell into which it has been rollformed. If the foaming has not concluded, the expansion may continue, and the frame shell may be deformed. The calibration tube may be an extrusion matrix or the like. The extrusion matrix may have a length of 1-40 meters, or even longer. The extrusion matrix/calibration tube may be a device which controls the shape of the profile during setting. The metal profile itself is made from thin metal foil, and may be easily deformable. Without the calibration tube/extrusion matrix the frame shell itself may not be able to withstand the pressure resulting from the foaming.

In one embodiment, the setting time may be less than 2 minutes, preferably less than 60 seconds, more preferably less than 30 seconds, even more preferably less than 20 seconds.

In one embodiment, the method steps are performed inline. The production rate may be 40 m/minute or faster, between 40 m/minute to 20 meter/minute or slower than 20 m/minute The production may occur in one continuous line, having successive stations. That may allow a continuous profile with a core to be produced. The individual frame members may subsequently be cut into suitable lengths.

In one embodiment, the method may further comprise the step of wrapping the profile with a second strength imparting layer. The second strength imparting layer may be a decorative layer. The second strength imparting layer may also be a layer contributing to the strength of the frame member.

In one embodiment, the foam material may be introduced through an opening extending along the length of the profile. The opening may be a pre bend fold included in the frame shell produced when the forming is performed. The opening may therefore extend along the entire length of the frame shell.

After introducing the foam material, the opening may be closed. It may be closed either by overlapping the metal ends, by adding a second material to close the opening, or by providing locking function. There may be other ways to close the opening, and it may be possible that the closure is temporary while the foam sets.

In one embodiment, the frame shell is composed of two or more frame shell parts. The frame parts may be jointed together before injection of the foam. The joining may be performed by welding or use of adhesives.

In another aspect the invention relates to a frame member such as a side, a top or a bottom piece for a sash or frame structure for a window or door, said frame member comprising a core substantially made from a foamed material having a thermal conductivity below 0.037 W/m K and at least one strength imparting layer, covering at least a part of the core. The strength imparting layer comprises a rollformed sheet of metal formed into a frame shell having a predetermined profile. The foamed material is adapted to be injected into the metal profile and the at least one strength imparting layer has a thickness of 0.25 mm or less, preferably 0.15 mm or less, more preferably between 0.04-0.15 mm.

This provides a frame member formed from a metal sheet and pre formed to its profile shape. The injected foam material may therefore be allowed to expand within the profile. Hence, the foam material expands to assume the shape of the metal profile. This provides a frame member with sufficient structural strength and insulation properties approximately 4-5 times better than the insulation properties of wood. Further, since the core is allowed to expand and cool within the profile, the core maintains its given shape and internal tensions may be prevented. The strength imparting layer is preferably mostly made from a low thermal conductive metal, having a low thermal transfer value. The metal may be provided in a roll or coil of sheet metal, which is rollformed into frame shell having a profile. The frame shell may have an opening into which the foam material may be injected. Once the foam material expands, the frame shell may be held in a calibration tube in order to control the expansion. When the expansion is completed, the core may have assumed the same shape as the frame shell. By allowing the foam to expand within the frame shell, under the influence of the calibration tube, there is no risk that the finished frame member will be deformed during the influence of the expanding foam.

The core may have a density above 80 kg/m³ and/or between 80-200 kg/m³.

In one embodiment, the core may be made of polyurethane. Polyurethane has many desired properties such as good insulating properties and a suitable rigidity. Alternatively, some other materials with good insulting properties may be used, such as EPS. The polyurethane may be a non-isocyanate based polyurethane or isocyanate based polyurethane. A stiffening element may be incorporated into the core before or after setting of the foam.

In one embodiment, the foamed material is provided by a composition comprising materials setting quickly such as isocyanate and polyol. This is an advantage since the components are fluid until they react with each other. Once the materials are mixed, they may react with each other and with the humidity in the air to create a foam, and subsequently expand. The frame shell may comprise an opening. An injection nozzle may be inserted through the opening. The composition of Isocyanate and polyol may be poured or injected into the frame shell inline through the opening or through an injection nozzle. When isocyanate and polyol reacts with each other and the humidity in the air it may foam. The foaming procedure may be accelerated by applying CO₂ or pentane gases into the frame shell. Generally, the normal setting time will be around 60 sec. However, the setting time until the foam has expanded in full may vary between around 20 seconds to 180 seconds. The setting time may also be accelerated by adding accelerators to the composition. Preferably the ingredients for the foam is injected while the frame shell is moved along a production line.

After the injection of the foam material, the frame shell may be closed, and the foam may expand therein. The closing may be any suitable closing arrangement, such as a snap lock or the like. The closing arrangement may also be a pre bend fold which is folded into its position after the injection nozzle has been removed. Preferably all the operations are done inline at successive stations. closing of the frame shell may also be performed while the frame shell is moving down the production line.

Without wishing to be bound by theory, the invention is based on the recognition that the contribution of strength of the individual components of the frame member renders it possible to provide a frame member with properties corresponding to the local load and hence demand for bending, compressive and torsional strength.

The cross-sectional configuration of the frame member is bound by certain requirements. In the top section of the frame member, adapted to face the exterior, the local load will primarily be compressive stress, whereas at the bottom section, adapted to face the interior of the building, the tensile stress is predominant. The further into the core element towards the center, the tensile and the compressive stress equalizes and consequently the stress diminishes. According to the laws of statics, the moment of inertia and hence the bending stiffness increases by the power of three of the height of the element in question. Therefore, by strengthening a frame member at its periphery, by partly or completely providing a frame member with a strength imparting layer, a proportionally greater contribution of the strengthening material is provided to the member, than if the same material were provided in the center of the frame member.

The strength imparting layer may be formed by two or more parts, for instance a top part and a bottom part, or a first side part and a second side part. Preferably, the core is preferably eventually covered in full regardless of whether it has one or more parts in order to give the frame shell the desired strength capabilities and to protect the core from the surrounding environment.

In one embodiment, the strength imparting layer may be interrupted by at least one thermal bridge preventing gap. The gap may be positioned so that a thermal bridge is prevented. Since the frame shell is preferably made from a metal, the risk of cold/heat transfer from the outside to the inside of the window may be reduced if a gap is provided.

In one embodiment, the thermal bridge preventing gap is covered with a material different from the strength imparting layer. This material should preferably be a material with very low heat transfer value, such as a polymer tape, a vinyl foil or the like.

The frame member may have a maximum extension of 5 mm at a load of 300 Newton, preferably a maximum extension of 5 mm at a load of 800 Newton.

Preferably the strength imparting layer may be selected from a group consisting of aluminium, copper, stainless steel alloy, such as austenitic stainless steel, AISI Type 316 Stainless Steel and/or AISI Type 304 Stainless Steel. Aluminium is generally easy to work with and is available in a number of different thicknesses. Austenitic stainless steel and/or AISI Type 304 Stainless Steel has/have a considerable lower thermal conductivity than aluminium. Where the thermal conductivity for aluminium is approximately 240 W/m K it is only 16.2 W/m K for AISI Type 304 stainless steel and thereby considerably lower. This is particularly important when it is being used for window or door frame members, where hot and cold air meet at the frame, and thereby water vapour may accumulate on the warm side of the window or door frame, which is undesirable. In comparison, the thermal conductivity for wood is approximately 1.2 W/m K.

The strength imparting layer may constitute, one layer, more than one layer and/or the different strength imparting layers may be made of the same and/or different materials. The strength imparting layer is preferably a film or a foil with weatherproof qualities. The strength imparting layer may also be made of other types of steel or alloys.

The frame member may further comprise at least a second strength imparting cover layer. The second strength imparting layer may be in a different material than the strength imparting layer. The second strength imparting layer may be a decorative layer, provided by a foil or a veneer or the like. The second strength imparting layer may be adapted to contribute to the strength of the frame member.

The second strength imparting cover layer may be selected from a group consisting of: a biobased veneer, such as bamboo veneer, hemp veneer, basically any kind of wood veneer, or a plastic layer such as vinyl. Other materials such as fiberglass, polypropylene, polyvinylchloride or carbon fiber may also be used. The second strength imparting cover layer may both act as a strengthening layer and a decorative layer, as this will be the outer most layer of the window or door frame. The second strength imparting layer preferably has a thickness between 0.1 and 1 mm, more preferably between 0.4 and 0.7 mm.

The frame member may be provided with an additional receiving element, preferably embedded in the core. The receiving elements may be individual receiving elements for receiving attachment means in the form of screws or dovels placed directly where the attachment are meant to be positioned. Alternatively or additionally, a plate like element, for example a laminated plate, may be sandwiched post production of the core or embedded in the core during moulding thereof.

The strength imparting layer and the second strength imparting cover layer is preferably made of different materials.

The frame members may be wrapped in a wrapping device for wrapping profiles in laminates and foils, preferably provided with rolls for the different layers and divided into wrapping zones. Ideally the zones and/or rolls are easily exchangeable for an adaptable production line. This production process allows for a differentiated rollforming/wrapping, because the rollers with the different layers are easily exchangeable, for example if different kinds of rollforming materials or wrapping materials are required or if first a batch of small frame members requiring one strength imparting layer are run succeeded by larger frames requiring for example two strength imparting layers or a strength imparting layer of a different material or thickness.

It may also be possible to semi wrap the frame member. For example, a first layer may be provided on the side of the frame adapted to face the interior side of a building, while the side of the frame adapted to face the exterior side of the building may be provided with a different layer.

After the frame member has been wrapped, it is cut of in suitable lengths.

The frame members may be joined with a dove tail connection in the corners or glued together, to create a frame structure.

The foamed material may preferably be a rigid material in order to contribute to the rigidity and strength of the frame member.

The frame member may be a profiled and/or prism shaped frame member.

Substantially made from a foamed material, should be construed as meaning that separate elements of other materials may be incorporated into the core material, for receiving screws, dowels or other attachment means.

The frame member would as such replace the traditional wooden frame members and would thus constitute the supporting structure of the window or door. The frame member may thus be forming part of or constitute a frame or sash structure for a door or a window.

In yet another aspect the invention relates to use of a frame member according to the invention, for the production of a window or a door.

In the following, the invention will be described in further detail with reference to the drawings in which:
Fig. 1 is a cross section of a frame shell according to an embodiment of the invention,
Fig. 2a-b is a cross section of an embodiment of a frame shell at different production stages according to the invention,
Fig. 3 is a perspective view of a frame shell during a production step according to an embodiment of the invention,
Figs. 4a-b, 5 and 6 are schematic cross section views of a frame member according to embodiments of the invention.

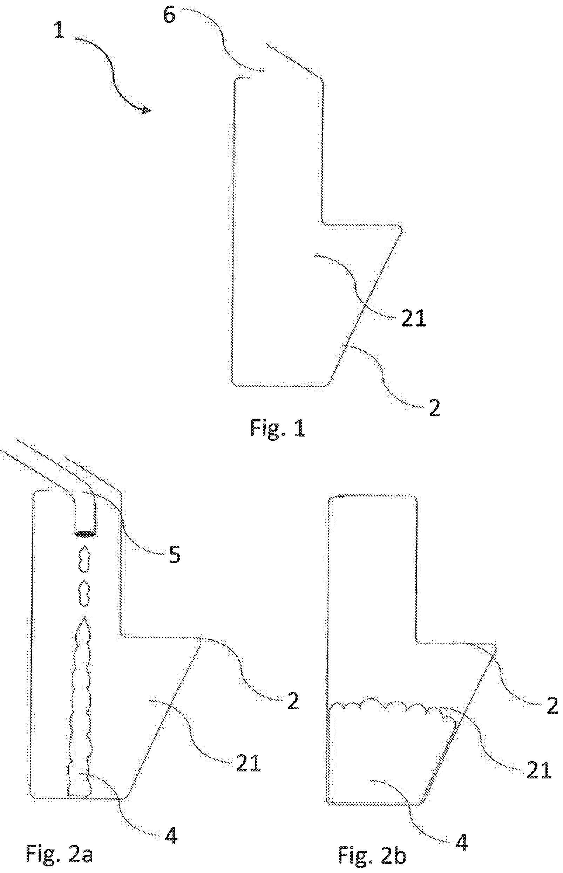

Fig. 1 shows a cross section of a frame shell 2 to be used during the production of a frame member 1. The frame shell 2 in fig. 1 comprises of a sheet metal that has been formed to correspond to the shape of the resulting frame member. The sheet metal may be a thin foil arranged to establish a frame shell 2 which is to be filled with a foam material, as can further be seen in Fig. 2a-b. The metal frame shell may be made as an elongated continuous profile in order to allow the finished frame member 1 to be cut into any suitable length. The metal frame shell may be provided with an opening 6 which provides an entry to an internal space 21 of the metal frame shell 2.

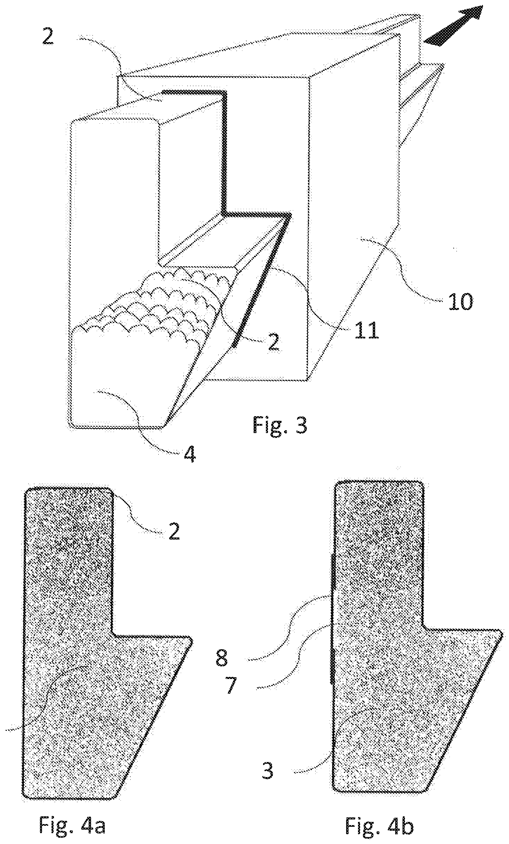

Fig. 2a-b show a production step in which an injection nozzle 5 is inserted through the opening 6. The injection nozzle 5 provides for injection of a material 4 that will constitute the core 3. The material is a material that may expand within the frame shell 2 and assume the same shape as the frame shell 2. The material may be a foam material 4 that after injection may foam up and hence expand within the frame shell 2. In Fig. 2a, the injection is performed, preferably while the frame shell 2 moves along a production line and the injection nozzle is injecting the foam material into the moving opening that extend along the length of the frame shell. In fig. 2b, the injection has been finalized and the foam material 4 has started to expand. In fig. 3 there is illustrated a further step in the production in which the frame shell 2 is arranged in a calibration tube 10 during the expansion of the foam material 4. This step is performed in order to ensure that the pressure forces from the foam material 4 does not deform the frame shell 2. The calibration tube 10 comprises an internal shape 11 that corresponds to the shape of the frame shell 2. The frame shell 2 is thus arranged in or may be conveyed or pulled through the calibration tube 10 through the duration of the expansion of the foam. The expansion may be completed within 20-180 seconds depending on the formulation of the foaming material 4. Preferably the expansion is completed within 20-60 seconds. The foaming material 4 may result in a core made from polyurethane. This may be achieved by a composition comprising the components isocyanate and polyol. The components may react with each other and the humidity in the air, and thus expand. The expansion may be controlled by adding reactants to the composition. The expansion may further be controlled by injecting the internal space 21 with a gas. The gas may be for instance air, CO₂ or pentane gases.

When the expansion is completed, the frame member 1 is constituted by a core 3 of polyurethane and an at least partly surrounding metal frame shell 2, as seen in Fig. 4a. In Fig. 4b, it appears that the frame shell may comprise an interruption 7. The interruption may be a thermal bridge preventing gap and may be arranged in order to prevent the cold from the outside air to travel via the metal profile to the inside of a building. The thermal bridge preventing gap 7 may in turn be covered with a sealing tape 8 or the like. The thermal bridge preventing gap 7 may also be covered only with a second strength imparting layer, which may be a decorative foil.

The frame member 1 may be provided with one or more receiving elements for receiving attachment means.

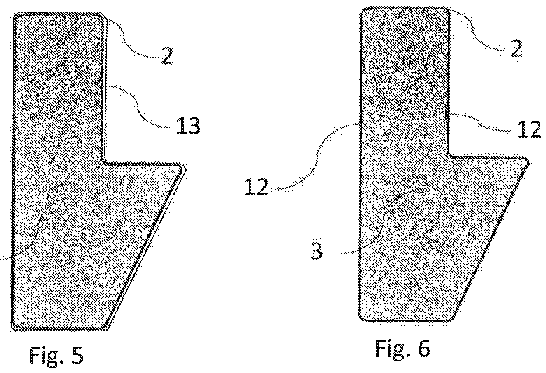

Fig. 5 is an embodiment of a frame member 2, where the profile is wrapped with a second strength imparting layer 13, for example a decorative foil.

Fig. 6 is an embodiment of a frame member 1, where the frame shell 2 is composed of two frame shell parts, with a joint 12 in the form of a welded connection or an adhesive.

The same reference numbers apply to the same features throughout the application. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. When referring to a frame member, it is to be construed as a sash member and/or a frame member. In general, the features of the embodiments shown and described may be combined freely and no feature should be seen as essential unless stated in the independent claims.

## Claims

1. A method of producing a frame member for a window or a door, the method comprising the steps of:
- providing a sheet of metal,
- rollforming the sheet of metal into a frame shell having a predetermined profile,
- introducing a foaming material into the frame shell, character ized in that
- the sheet of metal has a thickness of 0.25 mm or less and arranging the frame shell in a calibration tube until the foam material has set.

2. Method according to claim 1, comprising providing a composition for the foaming material, the composition comprising isocyanate and polyol, which upon reaction with each other creates a foam which expands within the frame shell.

3. Method according to claim 2, comprising adding a reactant to the composition, such as CO₂ or pentane gas.

4. Method according to claim 2 or 3, wherein the setting of the foam is accelerated by the addition of accelerating agents to the composition.

5. Method according to any of the preceding claims, further comprising the step of pulling the frame shell through the calibration tube during the setting time during which the foam material sets.

6. Method according to claim 5, wherein the setting time is less than 2 minutes, preferably less than 60 seconds, more preferably less than 30 seconds.

7. Method according to any of the preceding claims, the method further comprising the step of wrapping the profile with a second strength imparting layer.

8. Method according to any of the preceding claims, comprising introducing the foam material through an opening extending along the length of the frame shell.

9. Method according to any of the preceding claims, wherein after the step of introducing the foam material, the opening is closed, and wherein the closing is performed by either by
- overlapping the metal ends of the frame shell,
- adding a second material to close the opening, or
- a locking function.

10. Method according to any of the preceding claims, wherein the frame shell is composed of two or more frame shell parts.

11. A frame member, such as a side, a top or a bottom piece for a sash or frame structure for a window or door, produced according to any one of claims 1 to 10, said frame member comprising:
a core comprising a foamed material having a thermal conductivity below 0.037 W/m K,
at least one strength imparting layer covering at least a part of the core, the strength imparting layer comprises a rollformed sheet of metal formed into a frame shell having a predetermined profile, and
wherein the foamed material is adapted to be injected into the metal frame shell **characterized in that** the at least one strength imparting layer has a thickness of 0.25 mm or less, preferably 0.15 mm or less, more preferably between 0.04-0.15 mm.

12. Frame member according to claim 11, wherein the foamed material is made of polyurethane.

13. The frame member according to any of the preceding claims, wherein the strength imparting layer is interrupted by at least one thermal bridge preventing gap.

14. The frame member according to claim 13, wherein the thermal bridge preventing gap is covered with a material different from the strength imparting layer.

15. The frame member according to any one of the preceding claims, wherein the strength imparting layer is selected from a group consisting of aluminium, copper or a stainless steel alloy, such as austenitic stainless steel, ANSI type 316 stainless steel and AISI Type 304 Stainless Steel.

16. A frame structure for a door or a window comprising at least one frame member according to any one of claims 11-15.

17. Use of a frame member according to any one of claims 11-15, for the production of a window or a door.

## Patentansprüche

1. Verfahren zum Herstellen eines Rahmenelements für ein Fenster oder eine Tür, das Verfahren die folgenden Schritte umfassend:
- Bereitstellen eines Metallblechs,
- Walzprofilieren des Metallblechs zu einem Rahmenmantel mit einem vorbestimmten Profil,
- Einführen eines Schaummaterials in den Rahmenmantel, **dadurch gekennzeichnet, dass**
- das Metallblech eine Dicke von 0,25 mm oder weniger aufweist, und Anordnen des Rahmenmantels in einem Kalibrierungsrohr, bis das Schaummaterial ausgehärtet ist.

2. Verfahren nach Anspruch 1, Bereitstellen einer Zusammensetzung für das Schaummaterial umfassend, wobei die Zusammensetzung Isocyanat und Polyol umfasst, die bei Reaktion miteinander einen Schaum erzeugen, der sich in dem Rahmenmantel ausdehnt.

3. Verfahren nach Anspruch 2, Hinzufügen eines Reaktionspartners zu der Zusammensetzung umfassend, wie beispielsweise CO₂ oder Pentan-Gas.

4. Verfahren nach Anspruch 2 oder 3, wobei das Aushärten des Schaums durch die Zugabe von Beschleunigungsagenzien zu der Zusammensetzung beschleunigt wird.

5. Verfahren nach einem der vorhergehenden Ansprüche, weiterhin den Schritt des Ziehens des Rahmenmantels durch das Kalibrierungsrohr während der Aushärtungsdauer umfassend, während der das Schaummaterial aushärtet.

6. Verfahren nach Anspruch 5, wobei die Aushärtungsdauer kürzer als 2 Minuten, vorzugsweise kürzer als 60 Sekunden, besonders bevorzugt kürzer als 30 Sekunden ist.

7. Verfahren nach einem der vorhergehenden Ansprüche, das Verfahren weiterhin den Schritt des Einwickelns des Profils mit einer zweiten Festigkeit gebenden Schicht umfassend.

8. Verfahren nach einem der vorhergehenden Ansprüche, Einführen des Schaummaterials durch eine Öffnung umfassend, die sich längs des Rahmenmantels erstreckt.

9. Verfahren nach einem der vorhergehenden Ansprüche, wobei nach dem Schritt des Einführens des Schaummaterials die Öffnung verschlossen wird und wobei das Verschließen durchgeführt wird durch entweder
- Überlappen der Metallenden des Rahmenmantels,
- Hinzufügen eines zweiten Materials, um die Öffnung zu verschließen, oder
- eine Verriegelungsfunktion.

10. Verfahren nach einem der vorhergehenden Ansprüche, wobei der Rahmenmantel aus mindestens zwei Rahmenmantelteilen besteht.

11. Rahmenelement, wie beispielsweise eine Seite, ein Oberteil oder ein Unterteil für eine Flügel- oder Rahmenstruktur für ein Fenster oder eine Tür, das nach einem der Ansprüche 1 bis 10 hergestellt wurde, das Rahmenelement Folgendes umfassend:
einen Kern, ein geschäumtes Material mit einer Wärmeleitfähigkeit von weniger als 0,037 W/mK umfassend,
mindestens eine Festigkeit gebende Schicht, die mindestens einen Teil des Kerns abdeckt, wobei die Festigkeit gebende Schicht ein walzprofiliertes Metallblech umfasst, das zu einem Rahmenmantel mit einem vorbestimmten Profil ausgebildet wurde, und
wobei das geschäumte Material eingerichtet ist, um in den Metallrahmenmantel injiziert zu werden, **dadurch gekennzeichnet, dass** die mindestens eine Festigkeit gebende Schicht eine Dicke von 0,25 mm oder weniger, vorzugsweise von 0,15 mm oder weniger besonders bevorzugt zwischen 0,04 bis 0,15 mm aufweist.

12. Rahmenelement nach Anspruch 11, wobei das geschäumte Material aus Polyurethan angefertigt ist.

13. Rahmenelement nach einem der vorhergehenden Ansprüche, wobei die Festigkeit gebende Schicht durch mindestens einen Zwischenraum zum Vermeiden von Wärmebrücken unterbrochen ist.

14. Rahmenelement nach Anspruch 13, wobei der Zwischenraum zum Vermeiden von Wärmebrücken mit einem Material abgedeckt ist, das von der Festigkeit gebenden Schicht verschieden ist.

15. Rahmenelement nach einem der vorhergehenden Ansprüche, wobei die Festigkeit gebende Schicht aus einer Gruppe ausgewählt ist, bestehend aus Aluminium, Kupfer oder einer Edelstahllegierung, wie beispielsweise austenitischer Edelstahl, Edelstahl vom ANSI-Typ 316 und Edelstahl vom AISI-Typ 304.

16. Rahmenstruktur für eine Tür oder ein Fenster, mindestens ein Rahmenelement nach einem der Ansprüche 11 bis 15 umfassend.

17. Verwenden eines Rahmenelements nach einem der Ansprüche 11 bis 15 für die Herstellung eines Fensters oder einer Tür.

## Revendications

1. Procédé de production d'un élément d'encadrement pour une fenêtre ou une porte, le procédé comprenant les étapes de :
- fourniture d'une feuille de métal,
- formage aux galets de la feuille de métal en une coque d'encadrement ayant un profil prédéfini,
- introduction d'un matériau alvéolaire dans la coque d'encadrement, **caractérisé en ce que**
- la feuille de métal a une épaisseur inférieure ou égale à 0,25 mm et l'agencement de la coque d'encadrement dans un tube d'étalonnage jusqu'à ce que le matériau alvéolaire ait durci.

2. Procédé selon la revendication 1, comprenant la fourniture d'une composition pour le matériau alvéolaire, la composition comprenant de l'isocyanate et du polyol qui, lors d'une réaction l'un avec l'autre, créent une mousse qui s'étend dans la coque d'encadrement.

3. Procédé selon la revendication 2, comprenant l'ajout d'un réactif à la composition, tel que du CO₂ ou du pentane gazeux.

4. Procédé selon la revendication 2 ou 3, dans lequel le durcissement de la mousse est accéléré par l'addition d'agents d'accélération à la composition.

5. Procédé selon l'une quelconque des revendications précédentes, comportant en outre l'étape comprenant le fait de tirer la coque d'encadrement à travers le tube d'étalonnage pendant le temps de durcissement pendant lequel durcit le matériau alvéolaire.

6. Procédé selon la revendication 5, dans lequel le temps de durcissement est inférieur à 2 minutes, de préférence inférieur à 60 secondes, plus préférentiellement inférieur à 30 secondes.

7. Procédé selon l'une quelconque des revendications précédentes, le procédé comprenant en outre l'étape d'enveloppement du profil avec une seconde couche conférant une résistance.

8. Procédé selon l'une quelconque des revendications précédentes, comprenant l'introduction du matériau alvéolaire à travers une ouverture s'étendant sur la longueur de la coque d'encadrement.

9. Procédé selon l'une quelconque des revendications précédentes, dans lequel ; après l'étape d'introduction du matériau alvéolaire, l'ouverture est fermée, et dans lequel la fermeture est réalisée soit par
- chevauchement des extrémités métalliques de la coque d'encadrement,
- ajout d'un second matériau pour fermer l'ouverture, ou
- une fonction de verrouillage.

10. Procédé selon l'une quelconque des revendications précédentes, dans lequel la coque d'encadrement est composée de deux parties de coque d'encadrement ou plus.

11. Élément d'encadrement, tel qu'un côté, une pièce supérieure ou inférieure pour une structure de sas ou d'encadrement pour une fenêtre ou une porte, produit selon l'une quelconque des revendications 1 à 10, ledit élément d'encadrement comprenant :
une partie centrale comprenant un matériau alvéolaire ayant une conductivité thermique inférieure à 0,037 W/m K,
au moins une couche conférant une résistance recouvrant au moins une partie de la partie centrale, la couche conférant une résistance comprenant une feuille de métal formée aux galets prenant la forme d'une coque d'encadrement ayant un profil prédéfini, et
dans lequel le matériau alvéolaire est conçu pour être injecté dans la coque d'encadrement métallique, **caractérisé en ce que** l'au moins une couche conférant une résistance a une épaisseur inférieure ou égale à 0,25 mm, de préférence inférieure ou égale à 0,15 mm, plus préférentiellement entre 0,04 et 0,15 mm.

12. Élément d'encadrement selon la revendication 11, dans lequel le matériau alvéolaire est en polyuréthane.

13. Élément d'encadrement selon l'une quelconque des revendications précédentes, dans lequel la couche conférant une résistance est interrompue par au moins un espace évitant un pont thermique.

14. Élément d'encadrement selon la revendication 13, dans lequel l'espace évitant un pont thermique est couvert d'un matériau différent de la couche conférant une résistance.

15. Élément d'encadrement selon l'une quelconque des revendications précédentes, dans lequel la couche conférant une résistance est choisie dans un groupe consistant en aluminium, cuivre ou un alliage d'aciers inoxydables, tels que l'acier inoxydable austénitique, l'acier inoxydable ANSI de type 316 et l'acier inoxydable AISI de type 304.

16. Structure d'encadrement pour une porte ou une fenêtre comprenant au moins un élément d'encadrement selon l'une quelconque des revendications 11 à 15.

17. Utilisation d'un élément d'encadrement selon l'une quelconque des revendications 11 à 15, pour la production d'une fenêtre ou d'une porte.
